Europäisches Patentamt

European Patent Office

Office européen des brevets

(19)

(11) **EP 1 445 905 A1**

(12) **EUROPÄISCHE PATENTANMELDUNG**

(43) Veröffentlichungstag:
    **11.08.2004  Patentblatt 2004/33**

(51) Int Cl.7: **H04L 27/26**

(21) Anmeldenummer: 03002475.6

(22) Anmeldetag: **05.02.2003**

| (84) Benannte Vertragsstaaten:<br>**AT BE BG CH CY CZ DE DK EE ES FI FR GB GR HU IE IT LI LU MC NL PT SE SI SK TR**<br>Benannte Erstreckungsstaaten:<br>**AL LT LV MK RO** | (71) Anmelder: **SIEMENS AKTIENGESELLSCHAFT**<br>**80333 München (DE)**<br><br>(72) Erfinder: **Die Erfindernennung liegt noch nicht vor** |

(54) **Verfahren zur übertragung von Daten in einem Mehrträger-Funkkommunikationssystem**

(57)    Die Erfindung betrifft ein Verfahren zur Übertragung von Daten in einem Funkkommunikationssystem, wobei zur Übertragung ein in eine Mehrzahl von Subträgern (SUBTRÄGER1, SUBTRÄGER2, SUBTRÄGER3, SUBTRÄGER4) aufgeteiltes Frequenzband verwendet wird, wobei die zu einem Zeitpunkt (t) auf der Mehrzahl von Subträgern (SUBTRÄGER1, SUBTRÄGER2, SUBTRÄGER3, SUBTRÄGER4) zu übertragenden Symbole $((1, h_{01}, h_{02}, h_{03}),...)$ einen Kodevektor darstellen, und wobei senderseitig die Daten derart kodiert werden, dass unabhängig von den Daten aufgrund einer Kodierungsvorschrift ein empfängerseitig bekanntes Symbol (1) mindestens eine empfängerseitig bekannte Position innerhalb von mindestens einem Kodevektor einnimmt. Erfindungsgemäß wird empfängerseitig das bekannte Symbol (1) in der mindestens einen bekannten Position innerhalb des mindestens einen Kodevektors zur Kanalschätzung für den oder die der mindestens einen bekannten Position zugeordneten Subträger (SUBTRÄGER1, SUBTRÄGER2, SUBTRÄGER3, SUBTRÄGER4) verwendet.

# FIG 3

$t$

| SUBTRÄGER 1 | $1$ | $h_{13}$ | $h_{22}$ | $h_{31}$ | $1$ | $h_{53}$ | $h_{62}$ | $h_{71}$ |
| SUBTRÄGER 2 | $h_{01}$ | $1$ | $h_{23}$ | $h_{32}$ | $h_{41}$ | $1$ | $h_{63}$ | $h_{72}$ |
| SUBTRÄGER 3 | $h_{02}$ | $h_{11}$ | $1$ | $h_{33}$ | $h_{42}$ | $h_{51}$ | $1$ | $h_{73}$ |
| SUBTRÄGER 4 | $h_{03}$ | $h_{12}$ | $h_{21}$ | $1$ | $h_{43}$ | $h_{52}$ | $h_{61}$ | $1$ |

$f$

**Beschreibung**

Die Erfindung betrifft ein Verfahren zur Übertragung von Daten in einem Funkkommunikationssystem nach dem Oberbegriff des Anspruchs 1.

In Funk-Kommunikationssystemen werden Informationen (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei Teilnehmerstationen, z.B. Mobilstationen, Basisstationen, z. B. Node B's oder andere Funkzugangseinrichtungen, sowie gegebenenfalls weitere netzseitige Einrichtungen.

Der Zugriff von Stationen auf die gemeinsamen Funkressourcen des Übertragungsmediums, wie zum Beispiel Zeit, Raum, Frequenz, Leistung wird bei Funk-Kommunikationssystemen durch Vielfachzugriffsverfahren (Multiple Access, MA) geregelt.

Um eine möglichst effiziente Übertragung von Daten zu gewährleisten, zerlegt man das gesamte zur Verfügung stehende Frequenzband in mehrere Subträger (Mehrträgerverfahren). Die den Mehrträgersystemen, auch als OFDM (Orthogonal Frequency Division Multiplexing) bezeichnet, zugrunde liegende Idee ist es, das Ausgangsproblem der Übertragung eines breitbandigen Signals in die Übertragung einer Menge von schmalbandigen orthogonalen Signalen zu überführen. Dies hat außerdem den Vorteil, dass die am Empfänger erforderliche Komplexität reduziert werden kann.

Bei OFDM werden für die Subträger zeitlich annähernd rechteckige Pulsformen verwendet. Der Frequenzabstand der Sub-Träger wird derart gewählt, dass im Frequenzraum bei derjenigen Frequenz, bei welcher das Signal eines Sub-Trägers ausgewertet wird, die Signale der anderen Sub-Träger einen Nulldurchgang aufweisen. Somit sind die Sub-Träger orthogonal zueinander. Eine spektrale Überlappung der Sub-Träger und daraus resultierend eine hohe Packungsdichte der Sub-Träger ist erlaubt, da die Orthogonalität eine Unterscheidbarkeit der einzelnen Sub-Träger sicherstellt. Daher wird eine bessere Spektraleffizienz als bei dem einfachen FDM (Frequency Division Multiplexing) erreicht.

Vor dem Senden werden die zu übertragenden Daten mittels einer Kodierungsvorschrift kodiert. Unter dem Begriff Kanalkodierung versteht man Verfahren zur Umsetzung von Symbolen eines Symbolvorrats in Symbole eines anderen Symbolvorrats, welcher für die bevorstehende Übertragung vorteilhafte Eigenschaften aufweist. Hierbei werden z.B. Redundanzen für die Fehlerkorrektur hinzugefügt.

Nach dem Empfang eines Signals muss die empfangende Station (Teilnehmerstation oder Basisstation) dieses verarbeiten. Hierzu findet eine Kanalschätzung statt, welche die empfangene Intensität des jeweiligen Kanals überprüft.

Der Erfindung liegt die Aufgabe zugrunde, ein Verfahren der eingangs genannten Art aufzuzeigen, welches eine ressourcensparende Übertragung von Daten in einem Mehrträger-Funkkommunikationssystem erlaubt.

Dieses Aufgabe wird gelöst durch ein Verfahren mit den Merkmalen des Anspruchs 1.

Ausgestaltungen und Weiterbildungen sind Gegenstand der Unteransprüche.

In dem Funkkommunikationssystem werden Daten übertragen, wobei zur Übertragung ein in eine Mehrzahl von Subträgern aufgeteiltes Frequenzband verwendet wird. Die zu einem Zeitpunkt auf der Mehrzahl von Subträgern zu übertragenden Symbole stellen einen Kodevektor dar. Senderseitig werden die Daten derart kodiert, dass unabhängig von den Daten aufgrund einer Kodierungsvorschrift ein empfängerseitig bekanntes Symbol mindestens eine empfängerseitig bekannte Position innerhalb von mindestens einem Kodevektor einnimmt. Erfindungsgemäß wird empfängerseitig das bekannte Symbol in der mindestens einen bekannten Position innerhalb des mindestens einen Kodevektors zur Kanalschätzung für den oder die der mindestens einen bekannten Position zugeordneten Subträger verwendet.

Die Datenübertragung erfolgt in dem Funkkommunikationssystem vorzugsweise unter Verwendung aller Subträger, wie dies z.B. bei einem OFDM System gegeben ist. Die Subträger können orthogonal zueinander sein, um gegenseitige Störungen zu vermindern. Ein Empfänger kann Daten entweder auf einem oder auf mehreren Subträgern empfangen und auswerten.

Nach der Kodierung liegen Kodevektoren vor, die übertragen werden. Ein Kodevektor weist Elemente auf, deren Anzahl der Anzahl der Subträger entspricht. Jedes Element steht für ein Symbol, welches auf einem Subträger übertragen wird. Das erste Element beinhaltet somit ein Symbol, welches auf dem ersten Subträger übertragen wird, das zweite Element ein Symbol, welches auf dem zweiten Subträger übertragen wird, usw. Die verschiedenen Elemente eines Kodevektors werden gleichzeitig übertragen. Ein Kodevektor im Sinne der obigen Erläuterung kann z.B. auch aus mehreren Zeilen oder Spalten einer zur Kodierung verwendeten Matrix bestehen. Im Rahmen der Erfindung kann ein Kodevektor mit zur Kodierung verwendeten Vektoren übereinstimmen, er muss aber nicht in jedem Fall mit diesen übereinstimmen.

Die Kodierung der Daten muss einer Bedingung genügen: bei der Kodierung entsteht innerhalb von mindestens einem Kodevektor ein dem Empfänger bekanntes Symbol für mindestens ein empfängerseitig von der Position her bekanntes Element des Kodevektors. Dieses Ergebnis hängt nicht von einer Eigenschaft der Daten ab, vielmehr beruht sie ausschließlich auf dem eingesetzten Kodierungsverfahren. Somit ist diese Bedingung bei gegebenem Kodierungsverfahren für alle Daten erfüllt bzw. nicht erfüllt. Oft wird die Bedingung nicht nur durch mindestens einen Kodevektor, sondern durch alle im Rahmen des Kodierverfahrens zur Verfügung stehenden Kodevektoren erfüllt.

Die genannte Bedingung für die Kodierung kann z.B. durch ein Kodierverfahren erfüllt werden, bei dem aus einer Reihe von Kodes bzw. Kodevektoren, so z.B. aus einem beliebigen linearen binären Kode oder einer Gruppe von solchen Kodes, eine Untermenge herausgesucht wird, welche die Bedingung erfüllt. Diese Untermenge wird dann im Rahmen des erfindungsgemäßen Verfahrens zur Kodierung der Daten eingesetzt.

Empfängerseitig wird das bekannte Symbol zur Kanalschätzung verwendet. Die Kanalschätzung betrifft hierbei den oder die Subträger, auf dem oder denen das Symbol übertragen wurde. Die Kanalschätzung kann hierbei nach an sich bekannten Verfahrensschritten ablaufen. Somit erfüllt das bekannte Symbol empfängerseitig die Funktion eines Pilotsymbols.

In einer Weiterbildung der Erfindung sind aufgrund der Kodierungsvorschrift alle verschiedenen Kodevektoren orthogonal zueinander. Zur Ermittlung der Orthogonalität können die üblichen Verfahren der Vektormathematik herangezogen werden.

Vorzugsweise handelt es sich bei der Kodierungsvorschrift um eine Kodierung unter Verwendung einer Walsh-Hadamard Matrix. Die Kodevektoren stellen dann eine oder mehrere Spalten einer solchen Matrix dar. Die empfängerseitig bekannten Symbole sind Einsen, welche bei jeder Walsh-Hadamard Matrix in der obersten Zeile zu finden sind.

Das empfängerseitig bekannte Symbol kann aufgrund der Kodierungsvorschrift innerhalb zeitlich benachbart zu übertragenden Kodevektoren verschiedene empfängerseitig bekannte Positionen einnehmen. Hierbei wird also eine Reihe von Kodevektoren betrachtet, deren Versendung zeitlich aufeinander folgt. Das empfängerseitig bekannte Symbol befindet sich in benachbarten Kodevektoren nicht an der gleichen oder den gleichen empfängerseitig bekannten Positionen, d.h. das empfängerseitig bekannte Symbol wird nicht nacheinander auf dem oder den empfängerseitig bekannten gleichen Subträgern ausgestrahlt.

In einer Ausgestaltung der Erfindung nimmt das empfängerseitig bekannte Symbol aufgrund der Kodierungsvorschriften innerhalb zeitlich benachbart zu übertragenden Kodevektoren durch einen Algorithmus bestimmte empfängerseitig bekannte Positionen ein. Der Algorithmus kann hierbei verschieden ausgestaltet sein, er ist Teil der Kodierungsvorschriften. Ein solcher Algorithmus kann z.B. abhängen von der Art der verwendeten Modulation. Bei einer QPSK Modulation ist es vorteilhaft, wenn in jeweils zeitlich benachbart zu übertragenden Kodevektoren das empfängerseitig bekannte Symbol auf dem gleichen Subträger übertragen wird.

Vorzugsweise nimmt das empfängerseitig bekannte Symbol aufgrund der Kodierungsvorschrift in einer Reihe von zeitlich benachbart zu übertragenden Kodevektoren zeitlich regelmäßig wiederkehrend die mindestens eine empfängerseitig bekannte Position ein. Die Periode der zeitlichen Wiederkehr beträgt hierbei z.B. einen Bruchteil oder ein Vielfaches der Anzahl von Subträgern oder sie entspricht der Anzahl von Subträgern.

Einer Weiterbildung der Erfindung gemäß wird das empfängerseitig bekannte Symbol in der mindestens einen empfängerseitig bekannten Position innerhalb des mindestens einen Kodevektors mit der größten Sendeleistung von allen Symbolen des mindestens einen Kodevektors übertragen. Die Sendeleistung des empfängerseitig bekannten Symbols in der mindestens einen empfängerseitig bekannten Position kann somit größer als die Sendeleistungen der anderen Symbole des Kodevektors sein, oder auch gleich groß wie die größte Sendeleistung eines anderen Symbols des Kodevektors.

Mit Vorteil werden das empfängerseitig bekannte Symbol und die mindestens eine empfängerseitig bekannte Position durch eine Mitteilung des Senders an den oder die Empfänger zu empfängerseitig bekannten Größen. Eine derartige Mitteilung kann einmalig erfolgen, z.B. beim Einbuchen eines Empfängers in das Funkkommunikationssystem oder bei Beginn einer Übertragung, oder auch mehrfach, so z.B. wenn sich das Symbol oder die Position oder die Kodierungsvorschrift ändert.

Die Erfindung wird im folgenden anhand eines Ausführungsbeispiels näher erläutert. Dabei zeigen:

Figur 1:    ein Schema zur Übermittlung von Daten vom Sender zum Empfänger,

Figur 2a:   die Struktur von Walsh-Hadamard Matrizen,

Figur 2b:   die Struktur der Walsh-Hadamard Matrix der Dimension 4,

Figur 3:    ein Schema zur erfindungsgemäßen Übertragung von Daten.

Das Ausführungsbeispiel betrifft ein Funkkommunikationssystem, welches zur Übertragung von Daten eine Vielzahl schmalbandiger Subträger im Frequenzbereich verwendet (MC, Multi Carrier System). Hierbei kann es sich z.B. um ein System nach dem Standard OFDM (Orthogonal Frequenzcy Division Multiplex) oder dem Standard MC-CDMA (Multi Carrier Code Division Multiple Access) handeln.

In dem betrachteten Funkkommunikationssystem wird ein serieller Datenstrom auf die Subträger aufgeteilt und auf diesen parallel übertragen. Hierbei können die für einen Empfänger bestimmten Daten entweder über einen oder über mehrere Subträger vom Sender zum Empfänger übertragen werden.

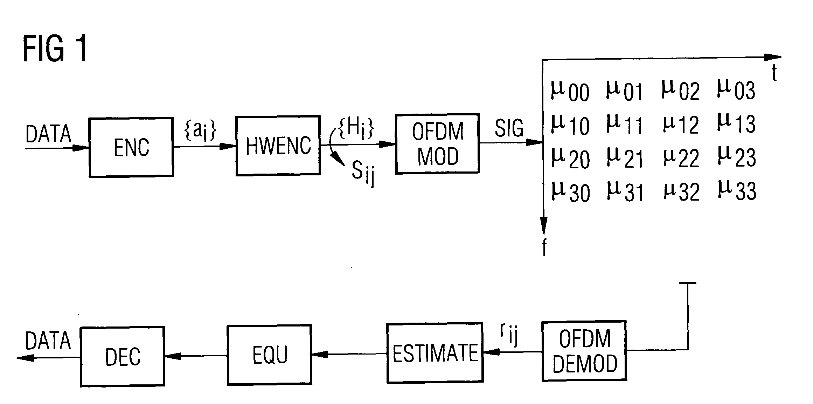

Figur 1 zeigt die Übertragung von Daten DATA von einem Sender zu einem Empfänger. Die Daten DATA werden senderseitig durch einen äußeren Kodierer ENC zur Fehlerkorrektur kodiert, wobei sie einer Faltungskodierung und gegebenenfalls einem Interleaving unterzogen werden. Der den äußeren Kodierer ENC verlassende binäre Datenstrom $\{a_i\}$ wird in eine Reihe von gleich langen Blöcken aufgeteilt, welche in einem Walsh-Hadamard Kodierer HWENC kodiert werden. Hierzu wird jeder Block als binäre Darstellung einer ganzen Zahl angesehen. Die ganze Zahl entspricht der Nummer der Spalte einer Walsh-Hadamard Matrix, welche an Stelle des Blocks übertragen wird.

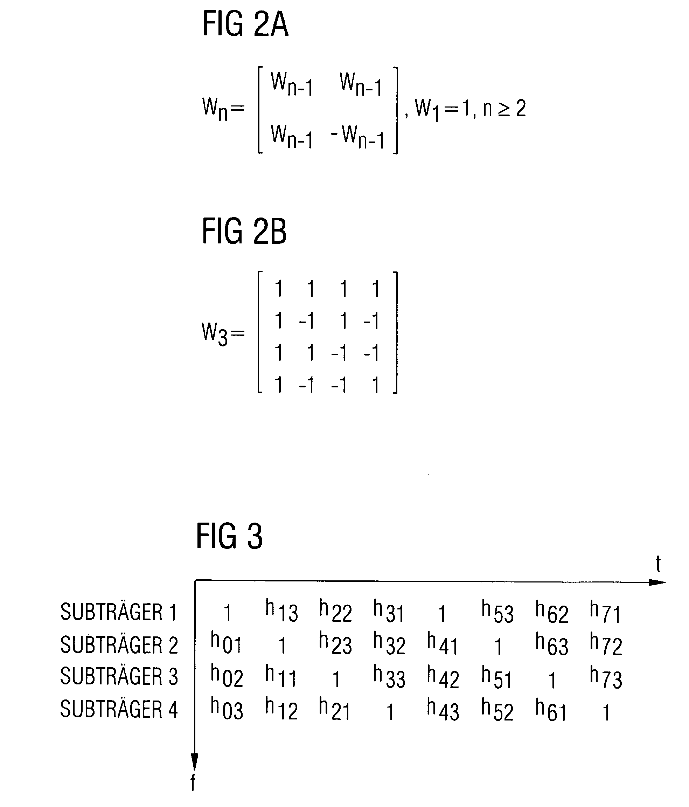

Figur 2a zeigt die formelmäßige Darstellung einer Walsh-Hadamard Matrix $W_n$. Die Matrizen $W_n$ ergeben sich rekursiv aus den Matrizen $W_{n-1}$ der nächstniedrigeren Dimension. Die Walsh-Hadamard Matrix der Dimension 1 trägt den Wert 1. Beispielhaft ist in Figur 2b der Aufbau der Walsh-Hadamard Matrix $W_3$ der Dimension 4 dargestellt. Die Elemente der Walsh-Hadamard Matrizen tragen die Zahlenwerte 1 oder -1.

Beispielhaft wird angenommen, dass der erste Block des Datenstroms $\{a_i\}$ die Struktur (1, 0, 0) aufweist. Diese Kombination stehe für die binäre Darstellung der Zahl 2.

Daher wird an Stelle des ersten Datenblocks die dritte Spalte einer Walsh-Hadamard Matrix übertragen.

Die Spalten einer Walsh-Hadamard Matrix werden in diesem Beispiel als Kodevektoren bezeichnet. Das Ergebnis $\{H_i\}$ der Kodierung mit dem Walsh-Hadamard Kodierer HWNEC besteht daher aus einer Reihe von Kodevektoren $\{H_i\}$.

Im Rahmen einer Modulation (Bitmapping) werden die Elemente der Kodevektoren $\{H_i\}$ zu Signalsymbolen $s_{ij}$. Diese werden zur OFDM-Modulation von Subträgern in einem Modulator OFDM MOD verwendet, woraufhin das Signal SIG über die Luftschnittstelle zum Empfänger übertragen wird.

Der Übertragungskanal ist in Figur 1 schematisch durch eine Matrix mit den Elementen $\mu_{ni}$ wobei n der Index der Frequenz f, d.h. des Subträgers, und i der Index der Zeit t ist. Die Matrix des Übertragungskanals in Figur 1 weist beispielhaft 16 Elemente auf. Dies entspricht einer Übertragung von vier Kodevektoren der Länge vier auf vier Subträgern. Bei den Elementen $\mu_{ni}$ handelt es sich um komplexe Gaußsche Zufallszahlen, welche den Einfluss der Funkübertragung auf die gesendeten Symbole $s_{ij}$ beschreiben. In der Regel sind die Elemente $\mu_{ni}$ untereinander stark korreliert.

Das im Empfänger empfangene Signal erhält man durch eine Matrixmultiplikation der gesendeten Symbole $s_{ij}$ mit dem Übertragungskanal:

$$r_{ij} = s_{ij} \cdot \mu_{ij}.$$

Zusätzlich kann Gaußsches Weißes Rauschen $n_{ij}$ addiert werden.

Nach der OFDM Demodulation des empfangenen Signals im Demodulator OFDM DEMOD erfolgt im Empfänger die Demodulation entsprechend den Regeln der senderseitigen Modulation, um die Symbole $r_{ij}$ zu erhalten. Zweck der folgenden Kanalschätzung im Kanalschätzer ESTIMATE ist die empfängerseitige Behebung von Veränderungen des gesendeten Signals, welche aufgrund der Eigenschaften des Übertragungssignals zustande gekommen sind. Üblicherweise erfolgt die Kanalschätzung unter Verwendung von Pilotsymbolen. Hierunter werden empfängerseitige bekannte Symbole verstanden, welche der Sender in die zu übertragenden Daten einfügt. Weiterhin ist dem Empfänger die Sendeleistung der Pilotsignale bekannt. Zur Kanalschätzung dividiert der Empfänger die empfangenen Pilotsymbole durch das gesendete Signal der Pilotsymbole und erhält somit die Eigenschaften des Übertragungskanals für die Frequenz, auf welcher die Pilotsymbole übertragen wurden. Um ein möglichst genaues Ergebnis für die Kanalschätzung zu erhalten, werden die Pilotsymbole mit höherer Leistung übertragen als die Daten. Dies hat zur Folge, dass die gesamte Übertragungsleistung mit der Zeit schwankt, da zu den Zeitpunkten, an welchen Pilotsymbole übertragen werden, mit einer höheren Leistung gesendet wird als zu den Zeitpunkten, an welchen ausschließlich Daten gesendet werden.

Nach erfolgter Kanalschätzung können die Daten im Empfänger in einem Entzerrer EQU entzerrt und in einem Dekodierer DEC dekodiert werden.

Im betrachteten Beispiel erfolgt die Kodierung unter Verwendung von Walsh-Hadamard Matrizen. Jede Walsh-Hadamard Matrix weist die Eigenschaft auf, dass die erste Zeile ausschließlich aus Einsen besteht. Dies hat zur Folge, dass der erste Subträger, welcher die erste Zeile der Kodevektoren überträgt, keine nützliche Information überträgt. Um Funkressourcen einzusparen, könnte somit auf die Übertragung der ersten Zeile eines jeden Kodevektors verzichtet werden. Erfindungsgemäß werden diese Einsen der ersten Zeile der zur Kodierung verwendeten Matrix jedoch zur Kanalschätzung verwendet.

Figur 3 zeigt eine Reihe von 8 Kodevektoren der Länge 4, welche übertragen werden sollen. Jede Spalte der Matrix der Figur 3 stellt somit einen Kodevektor dar. Nach rechts ist die Zeit t, nach unten die Frequenz f, d.h. die Subträger SUBTRÄGER1, SUBTRÄGER2, SUBTRÄGER3 und SUBTRÄGER4, aufgetragen. Jeder Kodevektor der Nummer i weist vier Elemente $h_{i0}$, $h_{i1}$, $h_{i2}$ und $h_{i3}$ auf. Hierbei tragen die Elemente der Kodevektoren $h_{i0}$ für alle Werte von i den Wert Eins.

Würden die Kodevektoren jeweils gemäß ihrem ursprünglichen Aufbau, welcher sich aus Figur 1 ergibt, übertragen, so stände für den ersten Subträger SUBTRÄGER1 zu allen Zeitpunkten eine zu versendende Eins. Somit wäre die Kanalschätzung unter Verwendung dieser Eins grundsätzlich nur für den ersten Subträger SUBTRÄGER1 möglich.

Um eine Kanalschätzung auch für die anderen drei Subträger SUBTRÄGER2, SUBTRÄGER3, SUBTRÄGER4 durchführen zu können, wird die Reihenfolge der Einsen an den durch die Walsh-Hadamard Matrizen vorgegebenen Stellen $h_{i0}$ zyklisch variiert. So wird der zweite Kodevektor nicht in der Reihenfolge, d.h. Verteilung auf die Subträger SUBTRÄGER1, SUBTRÄGER2, SUBTRÄGER3 und SUBTRÄGER4, $(h_{10}, h_{11}, h_{12}, h_{13})$, sondern in der Reihenfolge $(h_{13}, h_{10}, h_{11}, h_{12})$ angeordnet. Hierdurch wird das Element $h_{10}$ mit dem Wert Eins nicht auf dem ersten Subträger SUBTRÄGER1, sondern auf dem zweiten Subträger SUBTRÄGER2 übertragen. Die Elemente des zweiten Kodevektors wurden also jeweils um einen Subträger nach unten geschoben, wobei das unterste Element dann auf den obersten Subträger geschoben wurde.

Eine entsprechende Manipulation wird auch auf die folgenden Kodevektoren angewandt, so dass bei dem dritten Kodevektor das Element $h_{20}$ mit dem Wert Eins auf dem dritten Subträger SUBTRÄGER3 und bei dem vierten Kodevektor das Element $h_{30}$ mit dem Wert Eins auf dem vierten Subträger SUBTRÄGER4 übertragen wird. Nach dem vierten Kodevektor wurde ein Element $h_{i0}$ mit dem Wert Eins einmal auf jedem Subträger übertragen, so dass der fünfte Kodevektor, sofern die Position des Elementes $h_{40}$ mit dem Wert Eins betroffen ist, dem ersten Kodevektor entspricht. Weiterhin entspricht der sechste Kodevektor in dieser Hinsicht dem zweiten, der siebte dem dritten, usw.

Das beschriebene Vorgehen entspricht einer zyklischen Verschiebung der Elemente $h_{i0}$ mit dem Wert Eins innerhalb der Kodevektoren mit einer Periode, welcher gleich der Anzahl der Subträger ist. Für die Änderung der Reihenfolge der Elemente $(h_{i0}, h_{i1}, h_{i2}, h_{i3})$ der einzelnen Kodevektoren können jedoch auch andere Algorithmen angewandt werden. Wesentlich ist, dass der Empfänger den Algorithmus zur Verschiebung der Reihenfolge der Elemente der einzelnen Subträger kennt. Dem Empfänger muss also bekannt sein, in welcher Reihenfolge die Elemente eines Kodevektors $(h_{i0}, h_{i1}, h_{i2}, h_{i3})$ gesendet wurden. Dies kann durch eine Mitteilung des Senders an den Empfänger über die Schritte des angewandten Verfahrens geschehen. Dann kann das Element $h_{i0}$ mit dem Wert Eins zur Kanalschätzung desjenigen Subträgers verwendet werden, auf welchem es übertragen wurde.

Das beschriebene Verfahren weist den Vorteil auf, dass die Übermittlung eines Pilotsymbols zur Kanalschätzung zusätzlich zur Übertragung der Daten nicht nötig ist, so dass Funkressourcen eingespart werden können. Vielmehr wird ein Symbol zur Kanalschätzung verwendet, welches aufgrund des Kodierverfahrens mit Walsh-Hadamard Matrizen unabhängig von der Struktur der Daten entsteht. Ein weiterer Vorteil betrifft die Verteilung der Sendeleistung mit der Zeit. Werden die Symbole $h_{i0}$ mit dem Wert Eins mit bestimmten Leistung übertragen und werden alle anderen Symbole der Kodevektoren mit einer bestimmten niedrigeren Leistung übertragen, so ist die Sendeleistung bei einem Übertragungsschema gemäß Figur 3 mit der Zeit konstant und für jeden Kodevektor gleich groß, welches für den Verstärker technisch weniger aufwendig ist als eine ungleichmäßige Verteilung der Sendeleistung mit der Zeit.

Figur 3 zeigt, dass durch zyklische Vertauschung ein Gitter von Symbolen $h_{i0}$ mit dem Wert Eins, welche die Funktion von Pilotsymbolen zur Kanalschätzung einnehmen, entstanden ist. Somit kann ein Empfänger die Kanalschätzung für jeden Subträger mit einer zeitlichen Periode von vier Symbolen durchführen. Für die Kodevektoren bzw. Zeitpunkte, zu welchen kein Symbol $h_{i0}$ mit dem Wert Eins auf einem Subträger gesendet wird, können an sich bekannte Interpolation- oder Extrapolationsverfahren angewandt werden, um die zeitabhängigen Eigenschaften des Übertragungskanals zu erhalten.

Sollen gleichzeitig mehrere Symbole $h_{i0}$ mit dem Wert Eins übertragen werden, so kann zur Kodierung eine Walsh-Hadamard Matrix einer kleineren Dimension verwendet werden. Im Beispiel der Figur 3 liegen vier Subträger vor, die Kodevektoren entsprechen den Spalten einer vierdimensionalen Walsh-Hadamard Matrix. Sollen zwei Symbole $h_{i0}$ mit dem Wert Eins zu einem Zeitpunkt übertragen werden, so kann gleichzeitig ein Kodevektor der Länge zwei auf den ersten beiden Subträgern SUBTRÄGER1 und SUBTRÄGER2 und ein zweiter Kodevektor der Länge zwei auf den anderen beiden Subträgern SUBTRÄGER3 und SUBTRÄGER4 übertragen werden. Somit ist die Periode der Ausstrahlung eines Subträgers selbst bei zyklischer Verschiebung nicht mehr an die Länge der Kodevektoren gebunden. Die Verwendung von kürzeren Kodevektoren hat den Nachteil, dass zwar eine höhere Datenrate der Übertragung erreicht wird, diese kürzeren Kodevektoren jedoch zu einer geringeren Qualität der Fehlerkorrektur mittels der Kodierung führen.

Insgesamt kann somit eine flexible Anpassung der Größen

- Anzahl an Subträgern,

- übertragene Datenrate,
- Periode der Übertragung von Pilotsymbolen aneinander erfolgen.

Für das beschriebene Verfahren ist es irrelevant, ob ein Empfänger Daten auf einem oder auf mehreren Subträgern empfängt.

Im folgenden soll die Modulation (Bitmapping) von Symbolen gemäß Figur 3 anhand des Beispiels einer BPSK (Binary Phase Shift Keying) und einer QPSK (Quadrature Phase Shift Keying) betrachtet werden. Da der Empfänger genau wissen muss, an welcher Stelle des empfangenen Signals das zur Kanalschätzung zu verwendende Symbol sich befindet, muss die Modulation geeignet an die Kodierung angepasst werden. Insbesondere sollte die Position bzw. die Positionen der Symbole, welche für die Kanalschätzung verwendet werden sollen, dem gewählten Modulationsverfahren angepasst werden.

Im Fall einer BPSK Modulation ergibt sich das zu übertragende Signal $s_{n,i}$ aus einem Symbol $h_{i,n}$ eines Kodevektors gemäß:

$$s_{n,i} = \sqrt{E} \cdot (-1)^{h_{i,n}}.$$

Hierbei steht E für die Energie der Ausstrahlung des Signals $s_{n,i}$. Für die Symbole außer den Symbolen $h_{i,0}$ mit dem Wert Eins gilt dann:

$$s_{(i+k) \bmod N, i} = \sqrt{E} \cdot (-1)^{h_{i,k}}, \text{ wobei } k \neq 0.$$

Die Größe N steht hierbei für die Periode der Ausstrahlung der Pilotsymbole, welche gemäß Figur 3 vier beträgt. Die Modulo-N Division erfolgt aufgrund der in Figur 3 dargestellten Wiederholung der zyklischen Verschiebung nach vier Kodevektoren.

Für die Pilotsymbole gilt entsprechend:
$s_{i \bmod N, i} = \sqrt{E \cdot A^2} \cdot (-1)^1$. Die Sendeleistung der Pilotsymbole ist somit um das A-fache höher als für die anderen Symbole.

Die Gesamtenergie $E_{ges}$ der Ausstrahlung eines Kodevektors mit N Elementen beträgt dann:

$$E_{ges} = (N-1) \cdot E + A^2 \cdot E.$$

Die Kanalschätzung erfolgt im Empfänger gemäß folgender Berechnung unter Verwendung des empfangenen Signals r:

$$\hat{\mu}_{i \bmod N, i} = \frac{r_{i \bmod N, i}}{A \cdot \sqrt{E} \cdot (-1)}.$$

Hierbei ist $\hat{\mu}_{i \bmod N, i}$ eine Komponente des geschätzten Übertragungskanals.

Im Falle einer QPSK Modulierung ergibt sich das zu übertragende Signal $s_{n,i}$ aus zwei Symbolen $h_{2i,n}$ und $h_{2i+1,n}$ zweier Kodevektoren gemäß:

$$s_{n,i} = \sqrt{E} \cdot ((-1)^{h_{2i,n}} + j \cdot (-1)^{h_{2i+1,n}}).$$

Daher sollten bei Verwendung einer QPSK Modulierung bei jeweils zwei aufeinanderfolgenden Kodevektoren das empfängerseitig bekannte Symbol auf dem gleichen Subträger (Index n) gesendet werden.

Ein zu übertragendes Signal $s_{n,i}$ kann hierbei geschrieben werden als $s_{n,i} = s_{n,i}^{(ip)} + j \cdot s_{n,i}^{(q)}$, wobei (ip) für die In-Phase (in phase) und (q) für die Quadratur (quadrature) Komponente steht.

Für die Symbole außer den Symbolen $h_{i,0}$ mit dem Wert Eins gilt dann:

$$s_{(i+k) \bmod N, i} = \sqrt{E} \cdot ((-1)^{h_{2,k}} + j \cdot (-1)^{h_{2i+1,k}}), \text{ wobei } k \neq 0.$$

Für die Pilotsymbole gilt entsprechend:

$$s_{i \bmod N, i} = \sqrt{E} \cdot ((-1)^1 + j \cdot (-1)^1).$$

Die Kanalschätzung muss im Empfänger dann wie folgt durchgeführt werden:

$$\hat{\mu}^{(ip)}_{i \bmod N, i} = \frac{r^{(ip)}_{i \bmod N, i} + r^{(q)}_{i \bmod N, i}}{2 \cdot \sqrt{E} \cdot A \cdot (-1)} \text{ , und } \hat{\mu}^{(q)}_{i \bmod N, i} = \frac{r^{(q)}_{i \bmod N, i} - r^{(ip)}_{i \bmod N, i}}{2 \cdot \sqrt{E} \cdot A \cdot (-1)}.$$

Das beschriebene Verfahren ist auch auf andere Kodierverfahren, welche keine Walsh-Hadamard Matrizen verwenden, übertragbar. Voraussetzung hierfür ist, dass aufgrund der Kodierungen bekannte Signale an bekannten Stellen der Kodevektoren entstehen.

**Patentansprüche**

1. Verfahren zur Übertragung von Daten (DATA) in einem Funkkommunikationssystem,
   wobei zur Übertragung ein in eine Mehrzahl von Subträgern (SUBTRÄGER1, SUBTRÄGER2, SUBTRÄGER3, SUBTRÄGER4) aufgeteiltes Frequenzband verwendet wird,
   wobei die zu einem Zeitpunkt (t) auf der Mehrzahl von Subträgern (SUBTRÄGER1, SUBTRÄGER2, SUBTRÄGER3, SUBTRÄGER4) zu übertragenden Symbole ($(1, h_{01}, h_{02}, h_{03}), ...$) einen Kodevektor ($\{H_i\}$) darstellen,
   wobei senderseitig die Daten (DATA) derart kodiert werden, dass unabhängig von den Daten (DATA) aufgrund einer Kodierungsvorschrift ein empfängerseitig bekanntes Symbol (1) mindestens eine empfängerseitig bekannte Position innerhalb von mindestens einem Kodevektor ($\{H_i\}$) einnimmt,
   **dadurch gekennzeichnet,**
   **dass** empfängerseitig das bekannte Symbol (1) in der mindestens einen bekannten Position innerhalb des mindestens einen Kodevektors ($\{H_i\}$) zur Kanalschätzung für den oder die der mindestens einen bekannten Position zugeordneten Subträger (SUBTRÄGER1, SUBTRÄGER2, SUBTRÄGER3, SUBTRÄGER4) verwendet wird.

2. Verfahren nach Anspruch 1, **dadurch gekennzeichnet,**
   **dass** aufgrund der Kodierungsvorschrift alle verschiedenen Kodevektoren ($\{H_i\}$) orthogonal zueinander sind.

3. Verfahren nach Anspruch 1 oder 2, **dadurch gekennzeichnet,**
   **dass** es sich bei der Kodierungsvorschrift um eine Kodierung unter Verwendung von mindestens einer Walsh-Hadamard Matrix ($W_n$) handelt.

4. Verfahren nach einem der Ansprüche 1 bis 3, **dadurch gekennzeichnet,**
   **dass** das empfängerseitig bekannte Symbol (1) aufgrund der Kodierungsvorschrift innerhalb zeitlich benachbart zu übertragenden Kodevektoren ($\{H_i\}$) verschiedene empfängerseitig bekannte Positionen einnimmt.

5. Verfahren nach Anspruch 4, **dadurch gekennzeichnet,**
   **dass** das empfängerseitig bekannte Symbol (1) aufgrund der Kodierungsvorschrift innerhalb zeitlich benachbart zu übertragenden Kodevektoren ($\{H_i\}$) durch einen Algorithmus bestimmte empfängerseitig bekannte Positionen einnimmt.

6. Verfahren nach Anspruch 4 oder 5, **dadurch gekennzeichnet,**
   **dass** das empfängerseitig bekannte Symbol (1) aufgrund der Kodierungsvorschrift in einer Reihe von zeitlich benachbart zu übertragenden Kodevektoren ($\{H_i\}$) zeitlich regelmäßig wiederkehrend die mindestens eine empfängerseitig bekannte Position einnimmt.

7. Verfahren nach einem der Ansprüche 1 bis 6, **dadurch gekennzeichnet,**
   **dass** das empfängerseitig bekannte Symbol (1) in der mindestens einen empfängerseitig bekannten Position innerhalb des mindestens einen Kodevektors mit der größten Sendeleistung von allen Symbolen des mindestens einen Kodevektors übertragen wird.

8. Verfahren nach einem der Ansprüche 1 bis 7, **dadurch gekennzeichnet,**
   **dass** das empfängerseitig bekannte Symbol (1) und die mindestens eine empfängerseitig bekannte Position durch eine Mitteilung des Senders an den oder die Empfänger zu empfängerseitig bekannten Größen werden.

# FIG 1

EP 1 445 905 A1

# FIG 2A

$$W_n = \begin{bmatrix} W_{n-1} & W_{n-1} \\ W_{n-1} & -W_{n-1} \end{bmatrix}, W_1 = 1, n \geq 2$$

# FIG 2B

$$W_3 = \begin{bmatrix} 1 & 1 & 1 & 1 \\ 1 & -1 & 1 & -1 \\ 1 & 1 & -1 & -1 \\ 1 & -1 & -1 & 1 \end{bmatrix}$$

# FIG 3

|  | | | | | | | | $t$ |
|---|---|---|---|---|---|---|---|---|
| SUBTRÄGER 1 | $1$ | $h_{13}$ | $h_{22}$ | $h_{31}$ | $1$ | $h_{53}$ | $h_{62}$ | $h_{71}$ |
| SUBTRÄGER 2 | $h_{01}$ | $1$ | $h_{23}$ | $h_{32}$ | $h_{41}$ | $1$ | $h_{63}$ | $h_{72}$ |
| SUBTRÄGER 3 | $h_{02}$ | $h_{11}$ | $1$ | $h_{33}$ | $h_{42}$ | $h_{51}$ | $1$ | $h_{73}$ |
| SUBTRÄGER 4 | $h_{03}$ | $h_{12}$ | $h_{21}$ | $1$ | $h_{43}$ | $h_{52}$ | $h_{61}$ | $1$ |

$f$

Nummer der Anmeldung

EP 03 00 2475

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | MUENSTER ET AL.: "Co-channel interference suppression assisted adaptive OFDM in interference limited environments" IEEE VEHICULAR TECHNOLOGY CONFERENCE, 19. - 22. September 1999, Seiten 284-288, XP000929056 New York, US * Abschnitt 4 * | 1 | H04L27/26 |
| X | MANIATIS ET AL.: "Pilots for joint channel estimation in multi-user ofdm mobile radio systems" IEEE INTERNATIONAL SYMPOSIUM ON SPREAD SPECTRUM ECHNIQUES AND APPLICATIONS, 2. - 5. September 2002, Seiten 44-48, XP010615562 Piscataway, US * Abschnitt VD * | 1 | |
| X | TUFVESSON, MASENG: "Pilot assisted channel estimation for OFDM in mobile cellular systems" IEEE VEHICULAR TECHNOLOGY CONFERENCE, 4. - 7. Mai 1997, Seiten 1639-1643, XP000764446 New York, US ISBN: 0-7803-3660-7 * Abbildung 2 * | 1 | RECHERCHIERTE SACHGEBIETE (Int.Cl.7) H04L |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 15. Juli 2003 | Scriven, P |

**Europäisches Patentamt**

**EUROPÄISCHER RECHERCHENBERICHT**

Nummer der Anmeldung

EP 03 00 2475

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PARK, KANG: "Performance analysis of pilot symbol arrangement for OFDM system under time-varying multipath Rayleigh fading channels" IEICE TRANSACTIONS ON COMMUNICATIONS, Bd. E84-B, Nr. 1, Januar 2001 (2001-01), Seiten 36-45, XP000977974 Tokyo, JP * Seite 37, rechte Spalte, Absatz 3 - Seite 28, linke Spalte, Absatz 1 * * Abbildung 2 * | 1 | |
| X | YAMAMURA, HARADA: "High Mobility OFDM transmission system by a new channel estimation and ISI cancellation scheme using characteristics of pilot symbols inserted OFDM signal" IEEE VEHICULAR TECHNOLOGY CONFERENCE, 19. - 22. September 1999, Seiten 319-323, XP000929063 New York, US * Seite 320, linke Spalte, Absatz 5 * * Seite 321, rechte Spalte, Absatz 5 * | 1 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| DEN HAAG | 15. Juli 2003 | Scriven, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)